# EUROPEAN PATENT SPECIFICATION

(11) **EP 3 748 970 B1**
(45) Date of publication and mention of the grant of the patent: **14.08.2024**
(21) Application number: 20188141.4
(22) Date of filing: 20.01.2012
(51) Int. Cl.: H04N 19/513, H04N 19/61

(54) **METHOD FOR ENCODING VIDEO USING BUFFER COMPRESSION FOR MOTION VECTOR COMPETITION**
VERFAHREN ZUM KODIEREN VON VIDEOINHALTEN MIT PUFFERKOMPRESSION FÜR BEWEGUNGSVEKTORVERGLEICHE
PROCÉDÉ DE CODAGE VIDÉO UTILISANT UNE COMPRESSION DE TAMPON POUR COMPÉTITION DE VECTEUR DE MOUVEMENT

(30) Priority: 21.01.2011 US 201161435243 P; 05.05.2011 US 201113101451
(43) Date of publication of application: 09.12.2020
(62) Divisional of application: 16166910.6
(73) Proprietor: Velos Media International Limited, Dublin 18 (IE)
(72) Inventor: SEGALL, Christopher A., Camas, WA 98607 (US)
(74) Representative: Grünecker Patent- und Rechtsanwälte PartG mbB

(56) References cited:
- ONNO P: "CE9: Cross verification about the adaptation and modification (3.2.c) of the set of predictors", 4. JCT-VC MEETING; 95. MPEG MEETING; 20-1-2011 - 28-1-2011; DAEGU;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JCTVC-SITE/,, no. JCTVC-D117, 15 January 2011 (2011-01-15), XP030008157, ISSN: 0000-0015
- FUJIBAYASHI (NTT DOCOMO) A ET AL: "CE9: 3.2d Simplified motion vector prediction", 95. MPEG MEETING; 24-1-2011 - 28-1-2011; DAEGU; (MOTION PICTURE EXPERT GROUP OR ISO/IEC JTC1/SC29/WG11),, no. m18991, 15 January 2011 (2011-01-15), XP030047560
- TOURAPIS A M ET AL: "Fast ME in the JM reference software", 16. JVT MEETING; 73. MPEG MEETING; 24-07-2005 - 29-07-2005; POZNAN,PL; (JOINT VIDEO TEAM OF ISO/IEC JTC1/SC29/WG11 AND ITU-T SG.16 ),, no. JVT-P026r1, 29 July 2005 (2005-07-29), XP030006068, ISSN: 0000-0416
- BOSSEN F ET AL: "Simplified motion vector coding method", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SITE/,, no. JCTVC-B094, 17 July 2010 (2010-07-17), XP030007674, ISSN: 0000-0046

## Description

### TECHNICAL FIELD

The present invention relates to a method for image encoding using buffer compression for motion vector competition.

### BACKGROUND ART

### CROSS-REFERENCE TO RELATED APPLICATIONS: THIS APPLICATION

CLAIMS THE BENEFIT OF U.S. PROVISIONAL APP. No. 61/435,243, FILED JANUARY 21, 2011.

Existing video coding standards, such as H.264/AVC, generally provide relatively high coding efficiency at the expense of increased computational complexity. As the computational complexity increases, the encoding and/or decoding speeds tend to decrease. Also, the desire for increasingly accurate motion estimation tends to require increasingly larger memory requirements. The increasing memory requirements tend to result in increasingly more expensive and computationally complex circuitry, especially in the case of embedded systems.

ONNO P: "CE9: Cross verification about the adaptation and modification (3.2.c) of the set of predictors", JCT-VC Meeting; 95, MPEG MEETING; 20-1-2011 - 28-01-2011, describes an experiment, having the principle to change the order of motion vector predictor candidates in a list in such a way that the temporarily collocated motion vector predictor is the first element to be considered in the list. This is to be contrasted to former approaches where it is considered as the last element.

FUJIBAYASHI (NNT DOCOMO) A ET AL: "CE9:3.sd Simplified motion vector prediction", 95. MPEG MEETING; 24-1-2011-28-01-2011, describes simulation results for an experiment where a selection manner of predictive motion vector candidates is modified. The number of these candidates is changed to be formed from up to three motion vector predictors; A left, a top and a collocated predictor. The process of getting a left and a top predictor is modified where the first available motion vector is searched from the group of neighboring clocks left of the current block. The top predictor is derived in a similar fashion. The third predictor is derived from the collocated clock as conventional and the list predicted is then decimated by removing supplicated predictors.

TOURAPIS A M ET AL: "Fast ME in the JM reference software", 16. JVT MEETING: 73 MPEG MEETING; 24-07-2005-29-07-2005, describes a predictor selection, wherein instead of having to examine all possible checking positions within a given search area, only a smaller set of highly reliable predictors is examined, which is believed that might contain or be close enough to the best possible position. An adaptive predictor set is defined.

BOSSEN F ET AL: "Simplified motion vector coding method" 2. JCT-VC MEETING; 2-1-7-2010 -28-7-2010, relates to a method for coding motion vector data. A left predictor is obtained by searching for the first available motion left of the current clock. A motion vector is considered available if the vector is identical to the reference index of the current block. The search is performed from the top to bottom, and only the first available predictor is added to the list of candidates. A top predictor is derived in a similar fashion. A third predictor is derived from the collocated clock. If the collocated block has a motion vector, it is scaled according to the current temporal distance between the current from and the reference frame. The list of predictors is them decimated by removing the duplicate predictors.

The invention being defined only in the appended independent claims.

### SUMMARY OF INVENTION

One example of the present invention discloses a method for decoding video comprising: (a)identifying a first set of motion vectors from at least one neighboring block in a current frame; (b)identifying a second set of motion vectors from at least one block in a previous frame; (c)creating a list by using the first set and the second set of motion vectors; (d)removing a duplicate motion vectors from the list and thereafter selecting a motion vector in the list.

Another example of the present invention discloses a method for decoding video comprising: (a)creating a list of motion vectors by using a first set of motion vectors from at least one neighboring block in a current frame and a second set of motion vectors from at least one block in a previous frame; (b)removing a duplicate motion vectors from the list and thereafter selecting a motion vector transmitted from the list.

The foregoing and other objectives, features, and advantages of the invention will be more readily understood upon consideration of the following detailed description of the invention, taken in conjunction with the accompanying drawings.

### BRIEF DESCRIPTION OF DRAWINGS

FIG. 1 illustrates an encoder and decoder.
FIG. 2 illustrates a vector decoding process.
FIG. 3 illustrates a partial pair of two frames.
FIG. 4 illustrates a motion vector competition process.
FIG. 5 illustrates a particular motion vector competition process.
FIG. 6 illustrates a decoder with motion vector competition.

### DESCRIPTION OF EXAMPLES

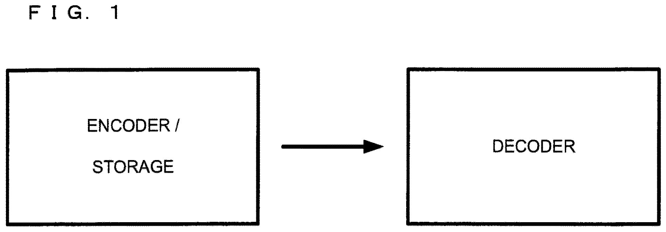

Referring to FIG. 1, a video system typically includes a video source such as an encoder or storage for encoded video, and a decoder. In the video decoder, one of the aspects that facilitates higher compression performance for high resolution video is larger block structures with flexible mechanisms of sub-partitioning.

For example, the TMuC (JCT-VC, "Test Model under Consideration", document JCTVC-A205 of JCT-VC, (2010), incorporated by reference herein) defines coding units (CUs) which define sub-partitioning of an image into rectangular regions. The coding unit contains one or more prediction units (PUs) and transform units (TUs). The partition geometry of these elements may be encoded using a tree segmentation structure. At the level of the PU, either intra-picture or inter-picture prediction may be selected. Intra-picture prediction may be performed from samples of already decoded adjacent PUs, where the different modes may include (1) DC (flat average), (2) horizontal, (3) vertical, (4) one of up to 28 angular directions (number depending on block size), (5) plane (amplitude surface) prediction, and (6) bilinear prediction. The signaling of the mode is derived from the modes of adjacent PUs. Inter-picture prediction is performed from regions(s) of already decoded pictures stored in the reference picture buffer. This permits selection among multiple reference pictures, as well as bi-prediction (including weighted averaging) from two reference pictures or two positions in the same reference picture. The reference area is selected by specifying a motion vector displacement and a reference picture index, which may generally be referred to herein as a motion vector. For efficient encoding or decoding, derivation of motion vectors from those of adjacent PUs may be made by a median computation or as motion vector competition (described below). The motion vector difference between the predicted motion vectors and the actual motion vectors may also be transmitted by the encoder or received by the decoder. Motion compensation may be performed with a motion vector precision up to quarter-sample or one-eights sample precision.

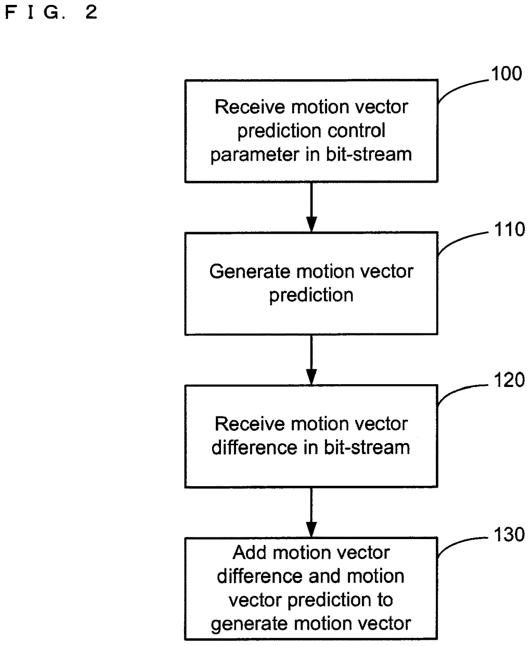

Referring to FIG. 2, motion compensation for the current prediction unit or block uses a motion vector coding process that generally includes receiving a motion vector prediction control parameter in the bit stream (Step 100). The motion vector prediction control parameter may be an index value used to select from among a group of available motion vectors. A motion vector prediction (Step 110) may be generated based upon the motion vector prediction control parameter received in Step 100. The decoder may also receive a motion vector difference (Step 120) in the bit stream. The motion vector difference received in Step 120 and the predicted motion vector in Step 110 are used to generate a motion vector for the current prediction unit or block (Step 130). In general, the bit stream provided to the decoder includes, among other data, a control parameter for the motion vector, and the difference between the prediction generated by the motion vector competition tool and the desired motion vector. A motion vector competition tools generally refers to the process of Step 100 and Step 110 in FIG. 2.

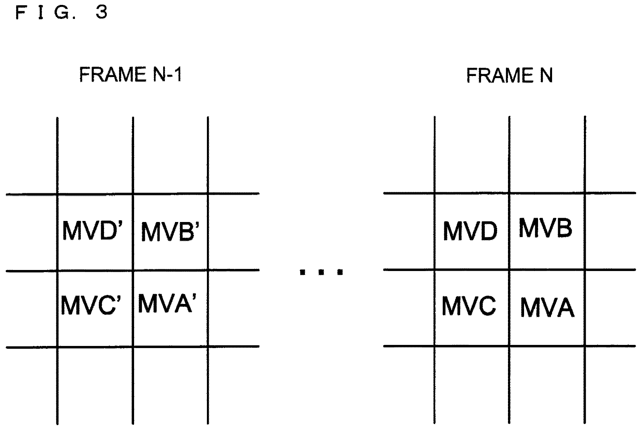

Referring to FIG. 3, for the motion vector competition process a list of candidate motion vectors may be created. In general, the potential motion vectors may include, for example, a motion vector MVB from above the current block A, a motion vector MVC to the left of the current block A, and a motion vector MVD to the above left of the current block A. The potential motion vectors may, for example, include one or more of all of the adjacent blocks. The list of candidate motion vectors may also include one or more motion vectors from one or more previously encoded frames. For example, one of the previous motion vectors may be the co-located block A' of the previous frame with the current block A. It is noted that often the video coding and decoding is not performed in the same temporal order in which it is displayed.

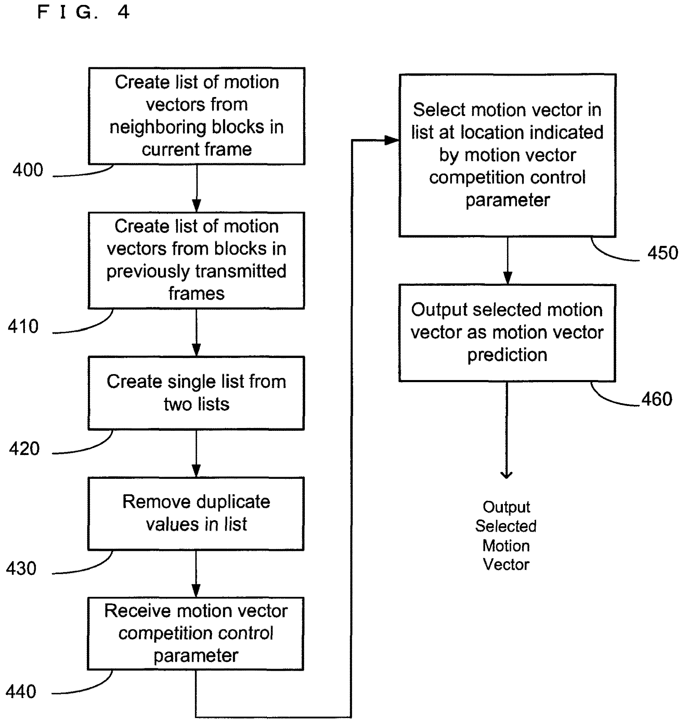

Referring to FIG. 4, a particular implementation of a motion vector competition process utilizes a list of motion vector(s) of neighboring block(s) in the current frame (Step 400) and a list of motion vector(s) from block(s) in a previously transmitted frame (Step 410). The two lists of motion vectors created in Steps 400 and 410 are merged (Step 420) to create a single list. Duplicate values (duplicated motion vectors) in the list are removed (Step 430). According to another example, Step 430 may be omitted. The motion vector competition control parameter (Step 440) is received, which is typically an index. The motion vector competition control parameter, or equivalently the motion vector control parameter, received in Step 440 is used to select (Step 450) an appropriate motion vector in the list obtained in Step 430 at the location indicated. The selected motion vector in Step 450 is provided as the motion vector prediction (Step 460). Thus, in a block by block manner, the motion vector competition tool predicts the motion vector for the current block. In general, the motion vector or any data which may be used to determine the motion vector may be transmitted.

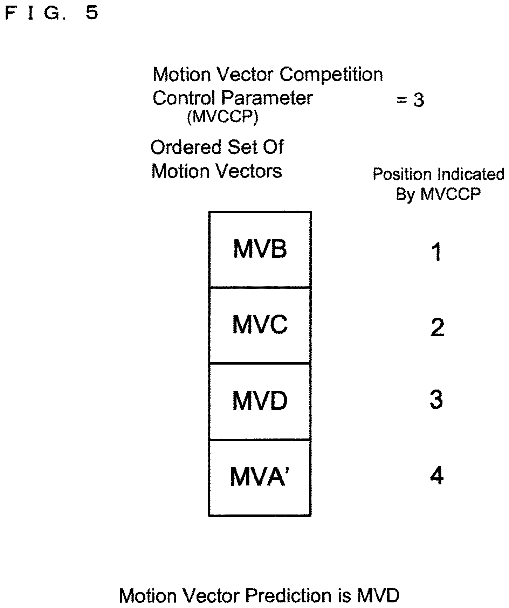

As an illustrative example, referring to FIG. 5, a motion vector competition control parameter (MVCCP) is received in the bit stream, such as for example 3. The motion vector competition control parameter indicates where in the list of candidate motion vectors the desired motion vector is. If a set of motion vectors MVB, MVC, MVD, MVA' is created then the motion vector control parameter would indicates that the third motion vector MVD should be selected for the current block A as the motion vector prediction 460. For example, MVCCP 1 may be MVB, MVCCP 2 may be MVC, MVCCP 3 may be MVD, and MVCCP 4 may be MVA'.

In particular to creating the list of motion vectors from blocks in previously transmitted frames (Step 410), several techniques have been previously used. For example, one such technique includes for a block in the current frame that spans the pixel locations (x,y) to (x+N, y+M), the motion vector from the previous frame used for the pixel prediction located at (x,y) is selected to be included in the list. For example, x,y may indicate the top-left position of the block, N may indicate the horizontal size of the block, and M may indicate the vertical size of the block. For example, another such technique includes for a block in the current frame that spans the pixel locations (x,y) to (x+N, y+M), the motion vector from the previous frame used for the pixel prediction located at (x+N/2, y+M/2) may be selected to be included in the list. The operator "/" indicates the integer division with truncation of the result toward zero. While such techniques may select desi ectors, the resulting list of motion vectors may tend to be large, resulting in significant memory requirements.

A technique according to the present invention for the current block in the current frame that spans the pixel locations (x,y) to (x+N, y+M) is to select and to store in the memory buffer the motion vector from the previous frame used for the pixel prediction located at ((x>>Z)<<Z, (y>>Z)<<Z) where Z is an integer.

According to the present invention Z is 4.

It is noted that (x>>Z)<<Z is generally equivalent to "the floor of (x/(2^Z))"*(2^Z). A floor function maps a real number to the largest previous integer value. For example, the floor(x)=[X] is The largest integer not greater than x. According to the present invention this technique is effective for a block size of 4 × 4.

According to an example useful for understanding the invention, a block size can be 16×16.

Another modified technique, not falling under the present invention, for the current block in the current frame that spans pixels locations (x,y) to (x+N, y+M) is to select and to store in the memory buffer the motion vector from the previous frame used for the pixel prediction located at (((x>>Z)<<Z)+Y, ((y>>Z)<<Z)+Y), where Y and Z are integers. Preferably Z is 4 and Y is 8. Also, Y may be 1<<(Z-1), which is generally equivalent to (2^Z)/2. It is noted that f(x>>Z)<<Z)+Y is generally equivalent to "the floor of(x/(2^Z))"*(2^Z)+Y. This technique is effective for a block size of 4 × 4 or. alternatively, 16 × 16.

Yet another modified technique, not falling under the present invention, for the current block in the current frame that spans pixel location (x,y) to (x+N, y+M) is to select and to store in the memory buffer the motion vector from the previous frame used for the pixel prediction located at (((x+N/2)>>Z)<<Z)+Y, (((y+M/2)>>Z)<<Z)+Y, where Y and Z are integers. Preferably Z is 4 and Y is 8. Also, Y may be 1<<(Z-1) which is generally equivalent to (2^Z)/2. It is noted that (((x>>Z)<<Z)+Y is generally equivalent to "the floor (x/(2^Z))"*(2^Z)+Y. This technique is effective for a block size of 4 × 4 or, alternatively, 16 × 16.

A further modified, not falling under the present invention, for the current block in the current frame that spans pixel location (x,y) to (x+N, y+M) is to select and to store in the memory buffer the motion vector from the previous frame used for the pixel prediction located at ((((x+N/2)>>Z)<<Z)+Y, (((y+M/2)>>Z)<<Z)+Y), where Y and Z are integers. Preferably Z is 4 and Y is 4. Also, Y may be 1<<(Z-2) which is generally equivalent to (2^Z)/4. It is noted that (((x>>Z)<<Z)+Y is generally equivalent to "the floor (x/(2^Z))"*(2^Z)+Y. This technique is effective for a block size of 4 × 4 or, alternatively, 16 × 16.

In yet another modified technique, not falling under the present invention, for the current block in the current frame that spans pixel locations (x,y) to (x+N,y+M) is where the motion vector from the previous frame for the co-located block is coded by interpolation prediction, and the system may select among multiple motion vectors belonging to the co-located block. In this example, a first motion vector for the current block is determined using a first motion vector in the previous frame used for the pixel prediction located at ((((x+N/2)>>Z)<<Z)+Y, (((y+M/2)>>Z)<<Z)+Y), where Y and Z are integers. Additionally, a second motion vector for the current block is determined using a second motion vector in the previous frame used for the pixel prediction located at ((((x+N/2)>>Z)<<Z)+Y, (((y+M/2)>>Z)<<Z)+Y), where Y and Z are integers. Preferably Z is 4 and Y is 4. Also, Y may be 1<<(Z-2) which is generally equivalent to (2^Z)/4. It is noted that (((x>>Z)<<Z)+Y is generally equivalent to "the floor (x/(2^Z))"*(2^Z)+Y. This technique is effective for a block size of 4 × 4 or, alternatively, 16 × 16.

Modified techniques may be used to select and to store in the memory buffer the motion vector from a previous frame which no longer requires the storage of every motion vector used in the prediction of previous frames. In a preferred example, the motion vectors that are not used by the modified techniques are removed from memory after all steps required to decode and reconstruct the current frame are completed. In an alternative example, the motion vectors that are not used by the modified techniques are removed from memory after being used for prediction but before all steps required to decode and reconstruct the current frame are completed. In a specific example, the motion vectors that are not used by the modified techniques are removed from memory before a de-blocking operation is performed, and the de-blocking operation uses only the motion vectors that are not used by the modified techniques for processing.

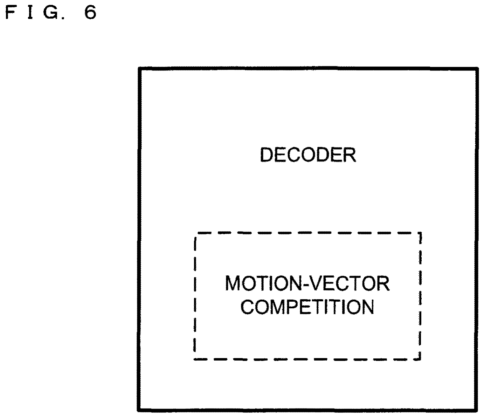

Referring to FIG. 6, a motion vector competition technique may likewise include a decoder that receives a bit stream from which a motion vector competition is applied. This data may include any suitable data previously described. In some example, the motion vector competition technique that includes a buffer compression may be used, without necessarily including the additional features described in relation to FIG. 4 and FIG. 5.

By using a flooring function for the selection of candidate vectors from the previous frame the number of candidate vectors from the previous frame is reduced. In this manner, the system may effectively reduce the number of vectors without likely eliminating the most appropriate motion vector from the available selection. Moreover, by reducing the list of candidate vectors in an effective manner, the memory buffer may be reduced, which reduces the complexity of the system, especially suitable for embedded systems.

In particular to creating the list of motion vectors from blocks in previously transmitted frames (Step 410). typically the motion vector is only added to the list if it is available. Thus, for a current block, the system only uses the motion vector from a previous frame if the co-located block uses a motion vector. While functional, such an approach does not take into account the full nature of the video stream of encoded frames.

A modified technique for the current block in the current frame that spans the pixel locations (x,y) to (x+N, y+M) is to only to select and to store in the memory buffer a motion vector if the pixel at location ((x>>Z)<<Z, (y>>Z)<<Z) in the previous frame is coded using an inter-prediction technique. Z is preferably an integer. In general, this means that the location in a previous frame can not be coded with an intra-prediction technique.

Another modified technique, not falling under the present invention, for the current block in the current frame that spans pixels locations (x,y) to (x+N, y+M) is to only to select and to store in the memory buffer a motion vector if the pixel at location (((x>>Z)<<Z)+Y, ((y>>Z)<<Z)+Y) in the previous frame is coded using an inter-prediction technique. Preferably Y and Z are integers. In general, this means that the location in a previous frame can not be coded with an intra-prediction technique.

Yet another modified technique, not falling under the present invention, for the current block in the current frame that spans pixel location (x,y) to (x+N, y+M) is to only to select and to store in the memory buffer a motion vector if the pixel at location ((((x+N/2)>>Z)<<Z)+Y, (((y+M/2)>>Z)<<Z)+Y) in the previous frame is coded using an inter-prediction technique. Preferably Y and Z are integers. In general, this means that the location in a previous frame can not be coded with an intra-prediction technique.

In a preferred implementation a combination of the flooring function is combined with the limitation of an inter-prediction technique. For example, the system may only select a motion vector from a previous frame if the co-located block is coded using an inter-prediction technique. Furthermore, preferably if the system points to an intra-coded block in the previous frame, then the motion vector may be assumed to be 0 at that location.

## Claims

1. A method for encoding video comprising:
creating a first list comprising motion vectors of one or more neighboring blocks of a current block in a current frame (400), wherein the one or more neighboring blocks include an above block of the current block, a left block of the current block, and an above left block of the current block;
creating a second list comprising a motion vector of a block in a previously transmitted frame (410), wherein the block in the previously transmitted frame is determined by:
deriving coordinates of a position of the block in the previously transmitted frame by performing a flooring function,
wherein the flooring function operates an arithmetic right shift operation on a pixel position in the current frame based on a top-left position of the current block followed by an arithmetic left shift operation, and
wherein a magnitude of the arithmetic right shift operation and a magnitude of the arithmetic left shift operation each have a value of 4;
generating (420) a third list of motion vectors including the first list and the second list;
selecting (450) a motion vector in the third list as a motion vector predictor for the current block;
setting a control parameter indicating a location of the selected motion vector in the third list; and
encoding the control parameter into a bitstream, wherein the current block is a 4 × 4 block.

2. A encoder for encoding video, wherein the encoder comprises means for performing an encoding process comprising:
creating a first list of motion vectors from one or more neighboring blocks of a current block in a current frame (400), wherein the one or more neighboring blocks include an above block of the current block, a left block of the current block, and an above left block of the current block;
creating a second list comprising a motion vector of a block in a previously transmitted frame (410), wherein the block in the previously transmitted frame is determined by:
deriving coordinates of a position of the block in the previously transmitted frame by performing a flooring function,
wherein the flooring function operates an arithmetic right shift operation on a pixel position in the current frame based on a top-left position of the current block followed by an arithmetic left shift operation, and
wherein a magnitude of the arithmetic right shift operation and a magnitude of the arithmetic left shift operation each have a value of 4;
generating (420) a third list of motion vectors including the first list and the second list;
selecting (450) a motion vector in the third list as a motion vector predictor for the current block;
setting a control parameter indicating a location of the selected motion vector in the third list; and
encode the control parameter into a bitstream, wherein the current block is a 4 × 4 block.

## Patentansprüche

1. Verfahren zum Codieren von Videoinhalten, umfassend:
Erstellen einer ersten Liste mit Bewegungsvektoren von einem oder mehreren benachbarten Blöcken eines aktuellen Blocks in einem aktuellen Frame (400),
wobei der eine oder die mehreren benachbarten Blöcke einen oberen Block des aktuellen Blocks, einen linken Block des aktuellen Blocks und einen oberen linken Block des aktuellen Blocks aufweisen;
Erstellen einer zweiten Liste mit einem Bewegungsvektor eines Blocks in einem zuvor übertragenen Frame (410), wobei der Block in dem zuvor übertragenen Frame bestimmt wird durch:
Herleiten von Koordinaten einer Position des Blocks in dem zuvor übertragenen Frame durch Durchführen einer Flooring- bzw. Abrundungsfunktion,
wobei die Abrundungsfunktion eine arithmetische Verschiebungsoperation nach rechts auf einer Pixelposition in dem aktuellen Frame auf der Basis einer oberen linken Position des aktuellen Blocks durchführt, gefolgt von einer arithmetischen Verschiebungsoperation nach links, und
wobei eine Größenordnung der arithmetischen Verschiebungsoperation nach rechts und eine Größenordnung der arithmetischen Verschiebungsoperation nach links jeweils einen Wert von 4 haben;
Generieren (420) einer dritten Liste von Bewegungsvektoren, die die erste Liste und die zweite Liste aufweist;
Auswählen (450) eines Bewegungsvektors in der dritten Liste als einen Bewegungsvektorprädiktor für den aktuellen Block;
Einstellen eines Steuerparameters, der eine Stelle des ausgewählten Bewegungsvektors in der dritten Liste anzeigt; und
Codieren des Steuerparameters in einen Bitstrom,
wobei der aktuelle Block ein 4 × 4 Block ist.

2. Codierer zum Codieren von Videoinhalten, wobei der Codierer eine Einrichtung zum Durchführen eines Codierungsprozesses umfasst, umfassend:
Erstellen einer ersten Liste von Bewegungsvektoren aus einem oder mehreren benachbarten Blöcken eines aktuellen Blocks in einem aktuellen Frame (400), wobei der eine oder die mehreren benachbarten Blöcke einen oberen Block des aktuellen Blocks, einen linken Block des aktuellen Blocks und einen oberen linken Block des aktuellen Blocks aufweisen;
Erstellen einer zweiten Liste mit einem Bewegungsvektor eines Blocks in einem zuvor übertragenen Frame (410), wobei der Block in dem zuvor übertragenen Frame bestimmt wird durch:
Herleiten von Koordinaten einer Position des Blocks in dem zuvor übertragenen Frame durch Durchführen einer Flooring- bzw. Abrundungsfunktion,
wobei die Abrundungsfunktion eine arithmetische Verschiebungsoperation nach rechts auf einer Pixelposition in dem aktuellen Frame auf der Basis einer oberen linken Position des aktuellen Blocks durchführt, gefolgt von einer arithmetischen Verschiebungsoperation nach links, und
wobei eine Größenordnung der arithmetischen Verschiebungsoperation nach rechts und eine Größenordnung der arithmetischen Verschiebungsoperation nach links jeweils einen Wert von 4 haben;
Generieren (420) einer dritten Liste von Bewegungsvektoren, die die erste Liste und die zweite Liste aufweist;
Auswählen (450) eines Bewegungsvektors in der dritten Liste als einen Bewegungsvektorprädiktor für den aktuellen Block;
Einstellen eines Steuerparameters, der eine Stelle des ausgewählten Bewegungsvektors in der dritten Liste anzeigt; und
Codieren des Steuerparameters in einen Bitstrom,
wobei der aktuelle Block ein 4 × 4-Block ist.

## Revendications

1. Procédé d'encodage vidéo comprenant :
créer une première liste comprenant des vecteurs de mouvement d'un ou plusieurs blocs voisins d'un bloc actuel dans une trame actuelle (400), dans lequel les un ou plusieurs blocs voisins incluent un bloc supérieur du bloc actuel, un bloc gauche du bloc actuel, et un bloc supérieur gauche du bloc actuel ;
créer une deuxième liste comprenant un vecteur de mouvement d'un bloc dans une trame précédemment transmise (410), dans lequel le bloc dans la trame précédemment transmise est déterminé par :
dériver les coordonnées d'une position du bloc dans la trame précédemment transmise en exécutant une fonction de plancher,
dans lequel la fonction de plancher effectue une opération de décalage arithmétique vers la droite sur une position de pixel dans la trame actuelle en fonction d'une position supérieure gauche du bloc actuel suivie d'une opération de décalage arithmétique vers la gauche, et
dans lequel une magnitude de l'opération de décalage arithmétique vers la droite et une magnitude de l'opération de décalage arithmétique vers la gauche ont chacune une valeur de 4 ;
générer (420) une troisième liste de vecteurs de mouvement incluant la première liste et la deuxième liste ;
sélectionner (450) un vecteur de mouvement dans la troisième liste en tant que prédicteur de vecteur de mouvement pour le bloc actuel ;
régler un paramètre de commande indiquant l'emplacement du vecteur de mouvement sélectionné dans la troisième liste ; et
coder le paramètre de commande dans un flux binaire,
dans lequel le bloc actuel est un bloc 4 × 4.

2. Encodeur pour coder des vidéos, dans lequel l'encodeur comprend des moyens pour effectuer un processus de codage comprenant :
créer une première liste de vecteurs de mouvement à partir d'un ou plusieurs blocs voisins d'un bloc actuel dans une trame actuelle (400), dans lequel les un ou plusieurs blocs voisins incluent un bloc supérieur du bloc actuel, un bloc gauche du bloc actuel, et un bloc supérieur gauche du bloc actuel ;
créer une deuxième liste comprenant un vecteur de mouvement d'un bloc dans une trame précédemment transmise (410), dans lequel le bloc dans la trame précédemment transmise est déterminé par :
dériver les coordonnées d'une position du bloc dans la trame précédemment transmise en exécutant une fonction de plancher,
dans lequel la fonction de plancher effectue une opération de décalage arithmétique vers la droite sur une position de pixel dans la trame actuelle en fonction d'une position supérieure gauche du bloc actuel suivie d'une opération de décalage arithmétique vers la gauche, et
dans lequel une magnitude de l'opération de décalage arithmétique vers la droite et une magnitude de l'opération de décalage arithmétique vers la gauche ont chacune une valeur de 4 ;
générer (420) une troisième liste de vecteurs de mouvement incluant la première liste et la deuxième liste ;
sélectionner (450) un vecteur de mouvement dans la troisième liste en tant que prédicteur de vecteur de mouvement pour le bloc actuel ;
régler un paramètre de commande indiquant l'emplacement du vecteur de mouvement sélectionné dans la troisième liste ; et
coder le paramètre de commande dans un flux binaire,
dans lequel le bloc actuel est un bloc 4 × 4.
